# EUROPÄISCHE PATENTSCHRIFT

(11) **EP 2 912 935 B1**
(45) Veröffentlichungstag und Bekanntmachung des Hinweises auf die Patenterteilung: **01.02.2017**
(21) Anmeldenummer: 15155186.8
(22) Anmeldetag: 16.02.2015
(51) Int. Cl.: A01D 34/73

(54) **MESSERROTOR FÜR EIN MÄHGERÄT UND MÄHGERÄT MIT EINEM SOLCHEN**
Blade rotor for a mowing apparatus and mowing apparatus with same
Rotor à lame pour une faucheuse et faucheuse équipée d'un tel rotor

(30) Priorität: 26.02.2014 DE 102014203486
(43) Veröffentlichungstag der Anmeldung: 02.09.2015
(73) Patentinhaber: Deere & Company, Moline, IL 61265 (US)
(72) Erfinder: Tepe, Heinrich, 70100 Gray (FR); Guiet, Lionel, 70100 Gray (FR); Lebau, Jonathan, 21000 Dijon (FR)
(74) Vertreter: Reichert, Christian

(56) Entgegenhaltungen:
- EP-A1- 1 891 851
- EP-A1- 2 497 353
- DE-A1- 2 612 381
- FR-A1- 2 630 289

## Beschreibung

Die Erfindung betrifft einen Messerrotor für ein Mähgerät, mit einer Mähscheibe, wenigstens einem Mähmesser, wenigstens einem an der Mähscheibe befestigten Lagerbolzen zur schwenkbaren Lagerung des Mähmessers sowie einem an der Mähscheibe angeordneten Federblech zur Halterung des Mähmessers am Lagerbolzen.

Mähgeräte sind bekannt und werden unter anderem in der Landwirtschaft eingesetzt, um stängeliges Erntegut oder Halmgut zu schneiden und auf dem Boden in einem Schwad zur Aufnahme durch beispielsweise eine Ballenpresse abzulegen. Die Mähgeräte können als Scheibenmäher ausgebildet sein und verfügen über mehrere nebeneinander angeordnete Messerrotoren. Die Messerrotoren weisen rotierende ovalförmige Mähscheiben auf, an deren langen Enden Mähmesser schwenkbar an Lagerbolzen angeordnet sind. Die Mähmesser werden an einem an den Lagerbolzen ausgebildeten Lagerschaft zwischen einem Federblech, und der Mähscheibe schwenkbar gehalten, wobei das Federblech federnd mit einem Ende des Lagerbolzens in Eingriff steht und dieses zur Sicherung des Mähmessers auf dem Lagerbolzen verriegelt. Der Lagerbolzen ist üblicherweise in einer an der Mähscheibe ausgebildeten Befestigungsbohrung gelagert und wird an einer dem Federblech zugewandten Seite der Mähscheibe durch die Befestigungsbohrung geführt und an einer dem Federblech abgewandten Seite der Mähscheibe mit einer Schraubenmutter verschraubt. Bei Beschädigung oder Verschleiß eines Mähmessers, kann das Federblech mit einem Spannwerkzeug vom Lagerbolzenende gelöst werden, wodurch ein begrenzter Montageraum geschaffen wird, der die schnelle Entnahme des Mähmessers vom Lagerschaft ermöglicht. Bei Verschleiß oder Beschädigung des Lagerbolzens selbst ist jedoch eine aufwändige und zeitraubende Demontage der Mähscheibe erforderlich, da der beim Lösen des Federblechs vom Lagerbolzen zur Verfügung gestellte Montageraum nicht ausreicht, um den Lagerbolzen aus der Befestigungsbohrung zu führen. Dies wird erst mit einer kompletten Demontage des Federblechs von der Mähscheibe ermöglicht.

Die EP 1891851 A1 offenbart ein oben beschriebenes Mähgerät mit einer Mähscheibe für ein Mähmesser, mit einem Lagerbolzen zur schwenkbaren Lagerung des Mähmessers an der Mähscheibe. Das Mähmesser wird von einem mit einem Schwenkriegel verriegelbaren Federblech am Lagerbolzen gehalten, wobei der Lagerbolzen von einer dem Federblech zugewandten Seite durch eine Befestigungsbohrung in der Mähscheibe geführt und mit einer Schraubenmutter auf einer dem Federblech abgewandten Seite verschraubt wird. An Stelle eines Spannwerkzeugs kann hier das Federblech für Wartungszwecke entriegelt werden, so dass ein Montagefreiraum entsteht, der es ermöglicht das Mähmesser auszutauschen. Nachteilig ist auch hier, dass die Anordnung des Federbleches es verbietet, bei Verschleiß des Lagerbolzens diesen auszutauschen, ohne aufwändige Demontageschritte zur Demontage der Mähscheibe bzw. des Federbleches durchzuführen.

Die der Erfindung zugrunde liegende Aufgabe wird darin gesehen, einen Messerrotor der eingangs genannten Art anzugeben, durch welchen die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Messerrotor der eingangs genannten Art derart ausgebildet, dass in oder an der Mähscheibe eine Befestigungsbohrung vorgesehen ist, in die der Lagerbolzen von einer dem Federblech abgewandten Seite der Mähscheibe in die Befestigungsbohrung einschraubbar ist, wobei am Lagerbolzen ein Gewindebereich und ein Halterungsbereich ausgebildet ist und der Halterungsbereich beim Einschrauben des Lagerbolzens durch die Befestigungsbohrung einführbar und mit dem Federblech in Eingriff bringbar ist. Der Lagerbolzen ist damit von einer dem Federblech abgewandten Seite der Mähscheibe zugänglich und kann zum Einen aus seiner Befestigung an der Mähscheibe gelöst werden, ohne dass eine Demontage der Mähscheibe zum Entfernen des Federblechs erfolgen muss. Zum Anderen wird gewährleistet, dass eine Schnellwechselfunktion beim Wechsel eines Mähmessers gegeben ist, da auch hier das Federblech vom Lagerbolzenende mit einem Spannwerkzeug gelöst werden kann. Dadurch wird ein schneller und montagearmer Austausch auch des Lagerbolzens ermöglicht.

Der Halterungsbereich kann einen Lagerschaft für das Mähmesser und ein mit dem Federblech in Eingriff bringbares Lagerbolzenende umfassen, wobei zwischen dem Lagerschaft und dem Lagerbolzenende eine ringförmige Erhebung ausgebildet ist. Die ringförmige Erhebung dient zur Abgrenzung des Lagerschafts, auf dem das Mähmesser geführt wird, und stellt einen ringförmigen Vorsprung am Lagerbolzen dar. Die ringförmige Erhebung ist vorzugsweise am Lagerbolzen ausgeformt. Sie könnte alternativ jedoch auch durch einen in einer Ringnut geführten Sicherungsring oder durch einen auf den Lagerbolzen geführten Ring, der gegen einen den Lagerschaft begrenzenden Absatz gespannt wird ausgebildet sein. Als weitere Alternative könnte die ringförmige Erhebung auch als aufgeschraubte Schraubenmutter oder aufgeschraubter Ring ausgebildet sein.

Der Lagerbolzen kann einen Schraubkopf umfassen und es kann ein Verschleißschutz für den Schraubkopf vorgesehen sein. Der Schraubkopf kann dabei als Außen- oder Innensechskant, Außen- oder Innenvierkant, geschlitzt, gekreuzt oder auf andere übliche Art ausgebildet sein. Zwischen Schraubkopf und Gewindebereich kann ein Bereich ausgebildet sein, der als Aufnahmeschaft für den Verschleißschutz dient, der zum Schutz des Schraubkopfes angeordnet ist. Der Verschleißschutz kann dabei zwischen Schraubkopf und Gewindebereich angeordnet und beim Einschrauben des Lagerbolzens zwischen dem Schraubkopf und der Mähscheibe eingespannt werden. Der Verschleißschutz ist derart ausgebildet, dass sie den Schraubkopf seitlich überragend umschließt und gegen jeglichen Kontakt mit Fremdkörpern bzw. gegen Abschleifen, Beschädigungen und sonstigen Verschleiß beim Rotieren der Mähscheibe schützt.

Das Mähmesser umfasst eine Lagerbohrung, die derart bemessen sein kann, dass sie über das Lagerbolzenende und über die ringförmige Erhebung an den Lagerschaft führbar ist. Erst bei Rotation der Mähscheibe wird das Mähmesser, durch die am Mähmesser wirkenden Fliehkräfte, in seinen Lagerschaft nach außen gedrängt.

Das Federblech kann eine Haltebohrung umfassen, in die das Lagerbolzenende aufnehmbar ist, das heißt in welche das Lagerbolzenende hineinragen kann, wobei das Federblech an einem Randbereich der Haltebohrung an der ringförmigen Erhebung zur Anlage kommt. Das Federblech wird durch seine Federeigenschaft an die ringförmige Erhebung gedrückt und verriegelt somit den Zugang zum Mähmesser, so dass das Mähmesser auf dem Lagerbolzen axial fixiert bzw. gesichert ist.

An dem Federblech kann ein zur Mähscheibe weisender Haltewulst vorgesehen ist, welcher die ringförmige Erhebung teilweise umgibt und das Mähmesser an dem Lagerschaft hält. Hierdurch wird erreicht, dass das Mähmesser zuverlässig auf axialer Höhe des Lagerschaftes gehalten wird und bei eintretender Rotation der Mähscheibe leichter und verschleißarm radial in den Lagerschaft geführt werden kann.

Die oben dargestellte Ausführung eines Mährotors eignet sich insbesondere für den Einsatz an Mähgeräten, welche mit Mährotoren in Form von Mähscheiben, Mähtellern oder auch Mähtrommeln und mit oder ohne Aufbereitungseinheiten ausgebildet sein können.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Draufsicht eines landwirtschaftlichen Fahrzeugs mit einem Mähgerät,
- Fig. 2: eine perspektivische Oberseitenansicht eines Mähbalkens mit Messerrotor des Mähgerätes aus Figur 1,
- Fig. 3: eine Seitenquerschnittsansicht des Mähbalkens mit Messerrotor aus Figur 2,
- Fig. 4: eine Seitenquerschnittsteilansicht einer Mähscheibe mit einem Lagerbolzen des Messerrotors aus Figur 2 und

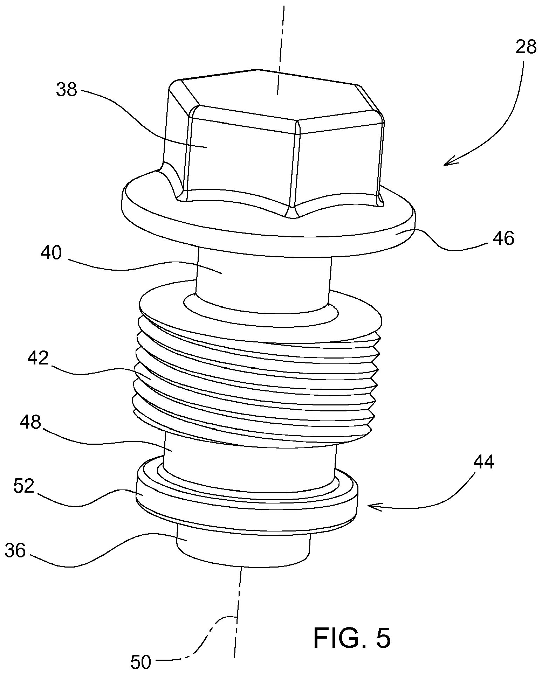

- Fig. 5: eine perspektivische Seitenansicht des Lagerbolzens aus Figur 4.

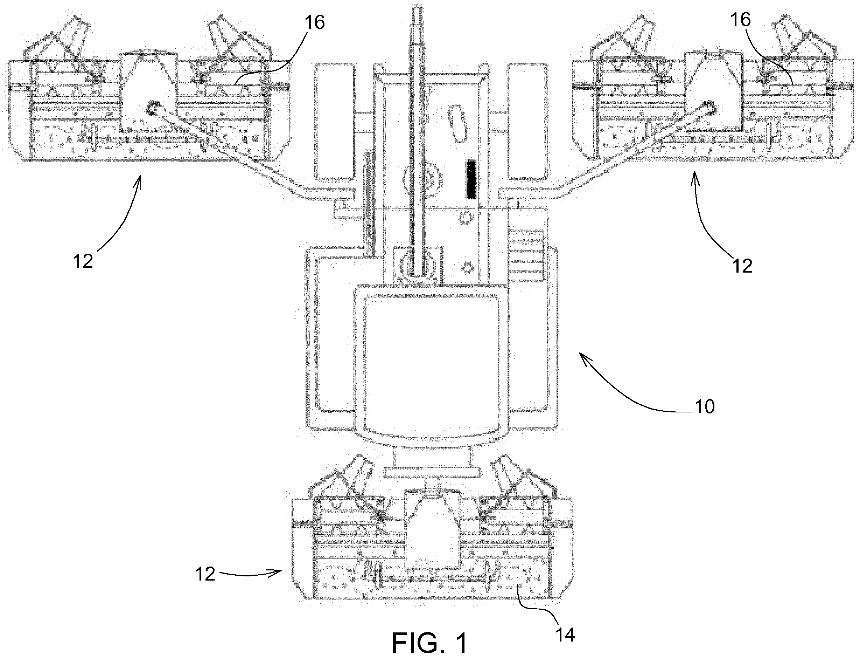

Das in Figur 1 dargestellte landwirtschaftliche Fahrzeug 10 stellt eine selbstfahrende Mähmaschine mit Mähgeräten 12 in Form von Frontmähwerk 14 und seitlichen Heckmähwerken 16 dar. Das hier als Selbstfahrer ausgebildete Fahrzeug 10 dient jedoch nur als Beispiel und könnte auch als landwirtschaftlicher Schlepper ausgebildet und mit entsprechend als Anbau- bzw. Anhängegeräte ausgebildeten Mähgeräten 12 bestückt sein.

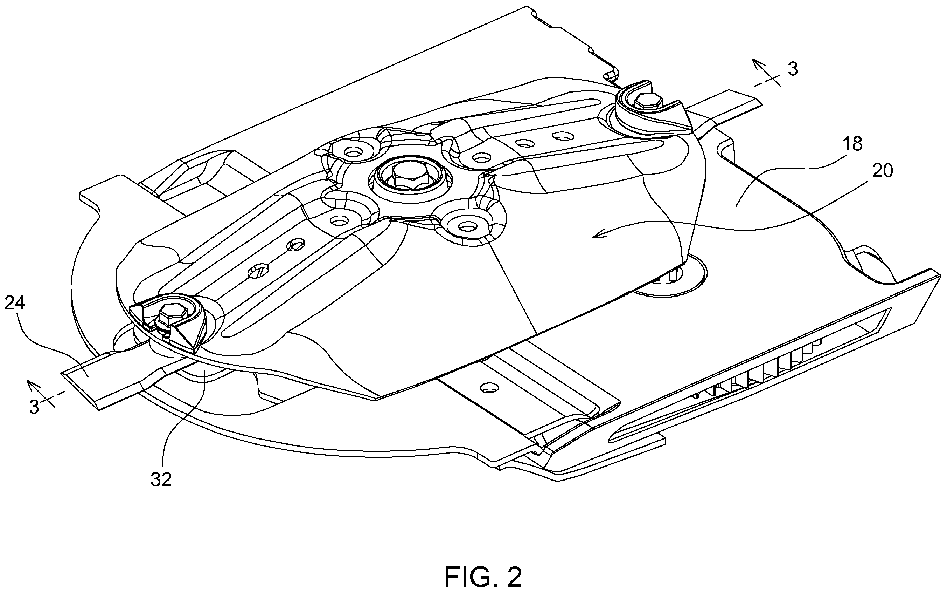

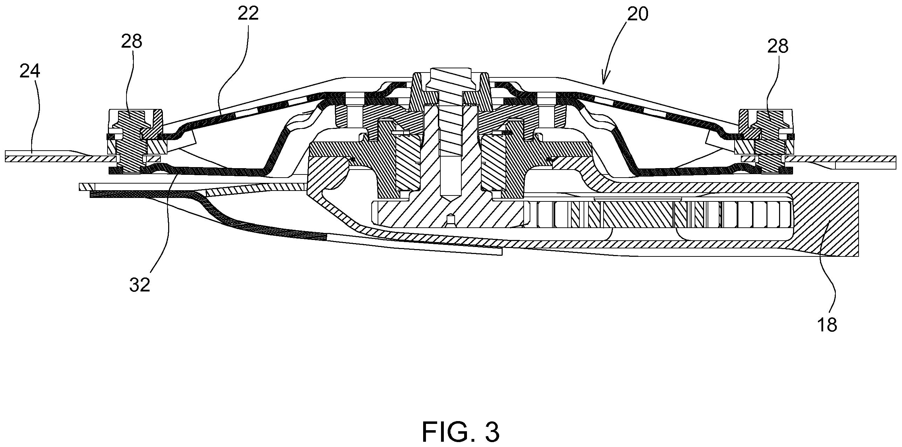

Wie in den Figuren 2 und 3 näher dargestellt ist, umfasst ein Mähgerät 12 einen Mähbalken 18 mit mehreren daran montierten und rotatorisch angetriebenen Messerrotoren 20 (hier nur einer dargstellt).

Der Messerrotor 20 umfasst eine Mähscheibe 22 mit daran schwenkbar befestigten Mähmessern 24 (hier nur eines dargestellt). Die Mähscheibe 22 ist in diesem Ausführungsbeispiel ovalförmig ausgebildet, wobei die Mähmesser 24 an den langen Enden des Ovals angeordnet sind. Der in diesem Ausführungsbeispiel als mit einer Mähscheibe 22 ausgebildete Messerrotor 20 könnte auch in bekannter Weise trommelförmig oder tellerförmig (Messertrommel, Messerteller) ausgebildet sein. Es sei darauf hingewiesen, dass in den Figuren 2 bis 4 die jeweils nach oben weisende Seite der Mähscheibe 22 die am Mähgerät 12 von dem zu bearbeitenden Boden abweisende Seite ist. Sie stellt zudem eine dem Betreiber für Montagezwecke zugängliche Seite der Mähscheibe dar. Im weiteren Verlauf der Beschreibung wird diese Seite als Oberseite der Mähscheibe 22 und die entsprechend entgegengesetzt angeordnete Seite der Mähscheibe 22 als Unterseite bezeichnet.

Die Mähmesser 24 sind über eine an der Mähscheibe 22 ausgebildeten und mit einem Gewinde versehenen Befestigungsbohrung 26 und einem daran eingeschraubten Lagerbolzen 28 an den Mähscheiben 22 schwenkbar aufgehängt bzw. gelagert. Die Befestigungsbohrung 26 ist an einer an der Mähscheibe 22 durch Schweißen befestigten Verstärkung 30 eingebracht. Die Verstärkung 30 ist hier als Platte oder Scheibe ausgebildet, sie kann jedoch auch auf andere Weise, beispielsweise durch eine größere Materialstärke der Mähscheibe 22 in diesem Bereich ausgebildet sein.

Zur Halterung und Schnellmontage eines Mähmessers 24 an der Unterseite der Mähscheibe 22 ein Federblech 32 angeordnet, welches sich ausgehend von der Mitte der Mähscheibe 22 zu den Enden der Mähscheibe 22 erstreckt. An den Endbereichen des Federblechs 32 ist jeweils eine Halterungsbohrung 34 ausgebildet, die mit dem Lagerbolzen 28 in Eingriff steht, derart, dass ein Ende 36 des Lagerbolzens 28 in der Halterungsbohrung 34 aufgenommenen bzw. eingespannt wird.

Der Lagerbolzen 28 umfasst einen Schraubkopf 38, einen daran angrenzenden Aufnahmeschaft 40, einen daran angrenzenden Gewindebereich 42, sowie einen daran angrenzenden Halterungsbereich 44 für das Mähmesser 24. Der Schraubkopf 38 weist einen ringförmigen Rand 46 mit einem Durchmesser auf, der größer ausgebildet ist als der Durchmesser des Gewindebereichs 42. Der zwischen Schraubkopf 38 und Gewindebereich 42 ausgebildete Aufnahmeschaft 40 weist einen Durchmesser auf, der kleiner bemessen ist, so dass durch den Gewindebereich 42 und dem Rand 46 des Schraubkopfes 38, jeweils ein Absatz gebildet wird, durch welche der Aufnahmeschaft 40 begrenzt ist. Zwischen dem dem Schraubkopf 38 entgegengelegenen Ende 36 des Lagerbolzens 28 und dem Gewindebereich 42 des Gewindebolzens ist der Halterungsbereich 44 für das Mähmesser 22 ausgebildet. Der Halterungsbereich 44 umfasst einen Lagerschaft 48 und eine sich radial zu einer Längsachse 50 des Lagerbolzens 28 erstreckende, ringförmige Erhebung 52 in Form eines Rings oder Kranzes, der sich um den Umfang des Lagerbolzens 28 zwischen dem Lagerschaft 48 und dem Ende 36 des Lagerbolzens 28 erstreckt, wobei der Durchmesser der ringförmigen Erhebung 52 kleiner bemessen ist, als der Durchmesser des Gewindebereichs 42 am Lagerbolzen 28, jedoch größer bemessen ist, als der Durchmesser am Lagerschaft 48. Der Durchmesser am Ende 36 des Lagerbolzens 28 ist derart bemessen, dass ein weiterer Absatz zur ringförmigen Erhebung 52 gebildet wird und das Ende 36 in die Halterungsbohrung 34 einführbar ist. Der Durchmesser der Halterungsbohrung 34 am Federblech 32 ist derart bemessen, dass das Federblech am Rand der Halterungsbohrung 34 an dem Absatz der ringförmigen Erhebung 52 zur Anlage kommen kann.

Das Mähmesser 24 weist an einem der Mähmesserklinge 54 gegenüberliegendem Ende eine Lagerbohrung 56 auf, deren Durchmesser derart bemessen ist, dass sie über das Lagerbolzenende 36 und über die ringförmige Erhebung 52 an den Lagerschaft 40 führbar ist.

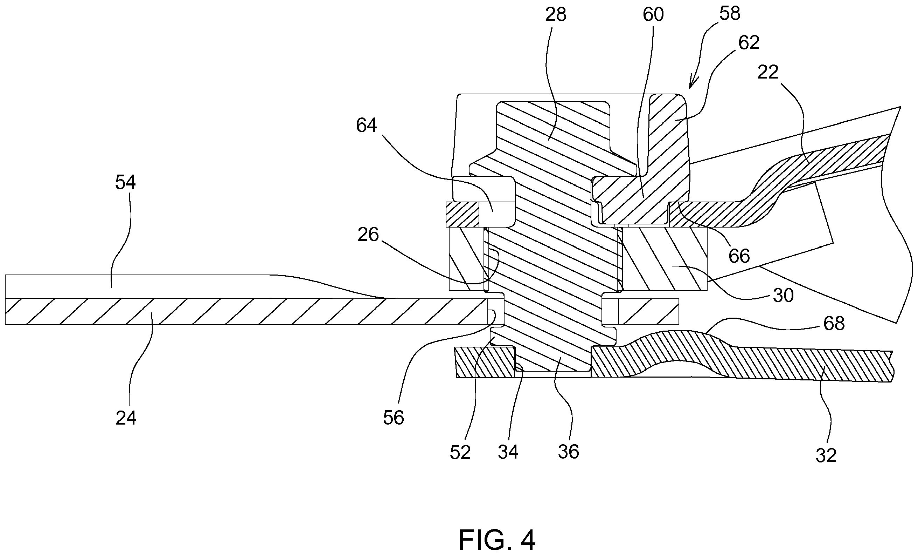

Wie in den Figuren 2 und 4 zu sehen ist, ist zum Schutz des Schraubkopfes 38 ein Verschleißschutz 58 vorgesehen. Der Verschleißschutz 58 stellt einen U-förmigen Kragen mit einem Befestigungsrand 60 und einem Kragenschaft 62, der bis über den Schraubkopf 38 ragt und diesen größtenteils umschließt. Der U-förmige Kragen 58 ist an einer Seite geöffnet, so dass der Befestigungsrand 60 zwischen den Rand 46 des Schraubkopfes und dem Gewindebereich 42 auf den Aufnahmeschaft 40 geführt bzw. eingepasst werden kann. An der Oberseite der Mähscheibe 22 ist im Bereich der Befestigungsbohrung 26 eine die Befestigungsbohrung 26 umgebende Aussparung 64 vorgesehen, an dessen Rand der Verschleißschutz 58 mit einem an seiner Unterseite ausgebildeten Absatz 66 zur Anlage kommt und zwischen dem Rand der Aussparung 64 und dem Rand 46 des Schraubkopfes eingespannt wird.

Ferner ist am Federblech 32 ein die Halterungsbohrung 34 umgebender und sich in Richtung des Mähmessers 24 bzw. der Mähscheibe 22 erstreckender Haltewulst 68 ausgebildet. Der Haltewulst 68 ist derart ausgeformt, dass das Mähmesser 24 an seiner Unterseite an einem die Lagerbohrung 56 umgebenden Randbereich auf dem Haltewulst 68 zur Anlage kommen kann, so dass das Mähmesser 24 auf Höhe des Lagerschaftes 48 gehalten wird.

Nach alledem stellt sich eine Montage des Lagerbolzens 28 an die Mähscheibe 22 zur schwenkbaren Lagerung des Mähmessers 24 wie folgt dar: Der Verschleißschutz 58 wird mit seiner geöffneten Seite auf den Aufnahmeschaft 40 des Lagerbolzens geführt. Der Lagerbolzen 28 wird mit seinem Halterungsbereich 44 voraus von der Oberseite der Mähscheibe 22 durch die Befestigungsbohrung 26 geführt und mit seinem Gewindebereich 42 in die Befestigungsbohrung 26 eingeschraubt, bis der am Verschleißschutz 58 ausgebildete Absatz 66 auf dem Rand der Aussparung 64 der Mähscheibe 22 zur Anlage kommt. Bevor der Lagerbolzen 28 mit seinem Ende 36 in die Halterungsbohrung 34 des Federblechs 32 hineinbewegt wird, wird das Mähmesser 24 auf den Halterungsbereich 44 bis über die ringförmige Erhebung 52 geführt. Bei vollständig eingeschraubtem Lagerbolzen 28 ragt dieser nun bis in die Halterungsbohrung 34 des Federblechs 32 herein, wodurch das Ende 36 des Lagerbolzens 28 blockiert wird und das Mähmesser zwischen Federblech 32 und Gewindebereich 42 eingeschlossen ist. Der Lagerbolzen 28 ist nun derart an der Mähscheibe 22 befestigt, dass der Halterungsbereich 44 sich ausgehend von der Befestigungsbohrung 26 zur Unterseite der Mähscheibe 22 erstreckt und mit seinem Ende 36 in die Halterungsbohrung 34 des Federblechs 32 ragt und das Federblech 32 an der ringförmigen Erhebung 52 anliegt. Das Mähmesser 24 wird dabei durch den Haltewulst 68 am Federblech 32 auf Höhe des Lagerschaftes 48 gehalten. Bei Inbetriebnahme des Messerrotors 20 kann sich das Mähmesser 24 durch die dabei entstehenden Fliehkräfte ungehindert in den vollständigen Lagersitz bewegen und um den Lagerschaft 48 schwenken. Eine schwenkbare Lagerung des Mähmessers 24 am Lagerschaft 48 dient dazu, dass das Mähmesser 24 bei Mäharbeiten eine gewisse Ausweichbewegung durchführen kann, wenn es auf einen Widerstand, beispielsweise einem Stein, trifft.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegenden Ansprüche fallen.

## Patentansprüche

1. Messerrotor (20) für ein Mähgerät (10), mit einer Mähscheibe (22), wenigstens einem Mähmesser (24), wenigstens einem an der Mähscheibe (22) befestigten Lagerbolzen (28) zur schwenkbaren Lagerung des Mähmessers (24) sowie einem an der Mähscheibe (24) angeordneten Federblech (32) zur Halterung des Mähmessers (24) am Lagerbolzen (28), **dadurch gekennzeichnet, dass** in oder an der Mähscheibe (22) eine Befestigungsbohrung (26) vorgesehen ist, in die der Lagerbolzen (28) von einer dem Federblech (32) abgewandten Seite der Mähscheibe (22) in die Befestigungsbohrung (26) einschraubbar ist, wobei am Lagerbolzen (28) ein Gewindebereich (42) und ein Halterungsbereich (44) ausgebildet ist und der Halterungsbereich (44) beim Einschrauben des Lagerbolzens (28) durch die Befestigungsbohrung (26) einführbar und mit dem Federblech (32) in Eingriff bringbar ist.

2. Messerrotor (20) nach Anspruch 1, **dadurch gekennzeichnet, dass** der Halterungsbereich (44) einen Lagerschaft (48) für das Mähmesser (24) und ein mit dem Federblech (32) in Eingriff bringbares Lagerbolzenende (36) umfasst, wobei zwischen dem Lagerschaft (48) und dem Lagerbolzenende (36) eine ringförmige Erhebung (52) ausgebildet ist.

3. Messerrotor (20) nach Anspruch 1 oder 2, **dadurch gekennzeichnet, dass** der Lagerbolzen (28) einen Schraubkopf (38) umfasst und ein Verschleißschutz (58) für den Schraubkopf (38) vorgesehen ist, wobei zwischen Schraubkopf (38) und Gewindebereich (42) ein Aufnahmeschaft (40) für den Verschleißschutz (58) ausgebildet ist.

4. Messerrotor (20) nach Anspruch 2 oder 3, **dadurch gekennzeichnet, dass** das Mähmesser (24) eine Lagerbohrung (56) umfasst, wobei das Mähmesser (24) mit der Lagerbohrung (56) über das Lagerbolzenende (36) und über die ringförmige Erhebung (52) an den Lagerschaft (48) führbar ist.

5. Messerrotor (20) nach einem der Ansprüche 2 bis 4, **dadurch gekennzeichnet, dass** das Federblech (32) eine Haltebohrung (34) umfasst, in die das Lagerbolzenende (36) aufnehmbar ist und das Federblech (32) an einem Randbereich der Haltebohrung (34) an der ringförmigen Erhebung (52) zur Anlage kommt.

6. Messerrotor (20) nach einem der Ansprüche 4 oder 5, **dadurch gekennzeichnet, dass** an dem Federblech (32) ein zur Mähscheibe (22) weisender Haltewulst (68) vorgesehen ist, welcher die ringförmige Erhebung (52) teilweise umgibt und das Mähmesser (24) an dem Lagerschaft hält.

7. Mähgerät (10) mit einem oder mehreren Messerrotoren (20) nach einem der Ansprüche 1 bis 6.

## Claims

1. Blade rotor (20) for a mowing apparatus (10), with a mowing disc (22), at least one mowing blade (24), at least one bearing pin (28), which is fastened to the mowing disc (22), for the pivotable mounting of the mowing blade (24), and a spring sheet (32), which is arranged on the mowing disc (24), for holding the mowing blade (24) on the bearing pin (28), **characterized in that** a fastening hole (26), into which the bearing pin (28) is screwable into the fastening hole (26) from a side of the mowing disc (22) that faces away from the spring sheet (32), is provided in or on the mowing disc (22), wherein a threaded region (42) and a holding region (44) are formed on the bearing pin (28), and the holding region (44) can be introduced when the bearing pin (28) is screwed through the fastening hole (26) and can be brought into engagement with the spring sheet (32).

2. Blade rotor (20) according to Claim 1, **characterized in that** the holding region (44) comprises a bearing shaft (48) for the mowing blade (24) and a bearing pin end (36) which can be brought into engagement with the spring sheet (32), wherein an annular elevation (52) is formed between the bearing shaft (48) and the bearing pin end (36).

3. Blade rotor (20) according to Claim 1 or 2, **characterized in that** the bearing pin (28) comprises a screw head (38) and a wear guard (58) is provided for the screw head (38), wherein a receiving shaft (40) for the wear guard (58) is formed between screw head (38) and threaded region (42).

4. Blade rotor (20) according to Claim 2 or 3, **characterized in that** the mowing blade (24) comprises a bearing hole (56), wherein the mowing blade (24) can be guided with the bearing hole (56) over the bearing pin end (36) and over the annular elevation (52) on the bearing shaft (48).

5. Blade rotor (20) according to one of Claims 2 to 4, **characterized in that** the spring sheet (32) comprises a retaining hole (34) into which the bearing pin end (36) can be received, and the spring sheet (32) comes into contact with an edge region of the retaining hole (34) by way of the annular elevation (52).

6. Blade rotor (20) according to either of Claims 4 and 5, **characterized in that** the spring sheet (32) is provided with a retaining bead (68) which faces the mowing disc (22) and partially surrounds the annular elevation (52) and retains the mowing blade (24) on the bearing shaft.

7. Mowing apparatus (10) with one or more blade rotors (20) according to one of Claims 1 to 6.

## Revendications

1. Rotor à lame (20) pour une faucheuse (10), avec un plateau faucheur (22), au moins une lame (24), au moins un axe de palier (28) fixé au plateau faucheur (22) pour le support pivotant de la lame (24) ainsi qu'une tôle élastique (32) disposée sur le plateau faucheur (24) pour la fixation de la lame (24) à l'axe de palier (28), **caractérisé en ce qu'**il est prévu dans ou sur le plateau faucheur (22) un alésage de fixation (26), dans lequel l'axe de palier (28) peut être vissé dans l'alésage de fixation (26) à partir du côté du plateau faucheur (22) situé à l'opposé de la tôle élastique (32), dans lequel une zone filetée (42) et une zone de fixation (44) sont formées sur l'axe de palier (28) et la zone de fixation (44) peut être introduite à travers l'alésage de fixation (26) lors du vissage de l'axe de palier (28) et elle peut être mise en prise avec la tôle élastique (32).

2. Rotor à lame (20) selon la revendication 1, **caractérisé en ce que** la zone de fixation (44) comprend une tige de palier (48) pour la lame (24) et une extrémité d'axe de palier (36) pouvant être mise en prise avec la tôle élastique (32), dans lequel une surélévation annulaire (52) est formée entre la tige de palier (48) et l'extrémité d'axe de palier (36).

3. Rotor à lame (20) selon la revendication 1 ou 2, **caractérisé en ce que** l'axe de palier (28) comprend une tête de vis (38) et il est prévu une protection contre l'usure (58) pour la tête de vis (38), dans lequel une tige de réception (40) pour la protection contre l'usure (58) est formée entre la tête de vis (38) et la zone filetée (42).

4. Rotor à lame (20) selon la revendication 2 ou 3, **caractérisé en ce que** la lame (24) comprend un alésage de palier (56), dans lequel la lame (24) peut être guidée avec l'alésage de palier (56) sur l'extrémité d'axe de palier (36) et sur la surélévation annulaire (52) sur la tige de palier (48).

5. Rotor à lame (20) selon l'une quelconque des revendications 2 à 4, **caractérisé en ce que** la tôle élastique (32) comprend un alésage de maintien (34) dans lequel l'extrémité d'axe de palier (36) peut être logée et la tôle élastique (32) vient buter sur la surélévation annulaire (52) à une région périphérique de l'alésage de maintien (34).

6. Rotor à lame (20) selon une des revendications 4 ou 5, **caractérisé en ce qu'**il est prévu sur la tôle élastique (32) un renflement de maintien (68) tourné vers le plateau faucheur (22), qui entoure en partie la surélévation annulaire (52) et qui maintient la lame (24) sur la tige de palier.

7. Faucheuse (10) équipée d'un ou de plusieurs rotor(s) à lame (20) selon l'une quelconque des revendications 1 à 6.
